(19) Europäisches Patentamt

European Patent Office

Office européen des brevets

(11) Publication number: **0 253 519 B1**

(12) **EUROPEAN PATENT SPECIFICATION**

(45) Date of publication of patent specification: **09.10.91**    (51) Int. Cl.⁵: **G01N 1/10, G01N 35/08**

(21) Application number: **87305438.1**

(22) Date of filing: **19.06.87**

(54) **Sample handling system.**

(30) Priority: **11.07.86 US 884454**

(43) Date of publication of application:
**20.01.88 Bulletin 88/03**

(45) Publication of the grant of the patent:
**09.10.91 Bulletin 91/41**

(84) Designated Contracting States:
**DE ES FR GB IT NL**

(56) References cited:
**EP-A- 0 039 147**
**DE-A- 3 502 546**
**GB-A- 2 025 900**
**US-A- 3 911 749**

(73) Proprietor: **BECKMAN INSTRUMENTS, INC.**
**Executive Office 2500 Harbor Boulevard Box 3100**
**Fullerton California 92634(US)**

(72) Inventor: **Buzza, Edmund E.**
**2801 Spruce Street**
**Fullerton California(US)**
Inventor: **Jackson, Delbert D.**
**800 S Brea Boulevard 514**
**Brea California(US)**

(74) Representative: **Arthur, John William et al**
**FITZPATRICKS 4 West Regent Street**
**Glasgow G2 1RS Scotland(GB)**

## Description

Background

The present invention relates generally to the field of automated analytical instruments and, more particularly, to a system of sample handling for automated clinical chemistry analyzers.

The Astra® System and the E4A™ Analyzer (available from Beckman Instruments, Inc., Brea, California) are clinical chemistry analyzers that illustrate two different types of analytical methodologies each having certain desirable attributes and advantages. The Astra Analyzer may include a plurality of individual analysis modules each having an open reaction cup. An automated sample probe withdraws a sample volume from samples carried on a carousel and distributes the sample volume to the analysis modules in accordance with the tests selected by the instrument operator.

The E4A Analyzer, on the other hand, utilizes a flow cell through which sample and diluent flow for the determination of four "electrolytes", namely, sodium, potassium, chloride and $CO_2$. The analyzer includes a shear valve (disclosed in U.S. Patent No. 4,297,903 (EP-A-0039 147)) having a bottom portion that swings to the side, allowing a sample pickup probe to extend vertically through the shear valve to aspirate sample from a cup aligned with the probe. The tip of the probe is withdrawn into the shear valve and the lower portion of the valve closes. Diluent from a diluent source flows into the valve, is mixed with the sample from the probe and flows to a flow analysis module.

The Astra Analyzer modules and the E4A Analyzer flow technology each provide unique advantages in the analysis of patient samples. For example, the Astra Analyzer enables the parallel analysis of samples using incompatible reagents that could not be used in a flow analysis module. On the other hand, the E4A Analyzer provides simplified fluid handling and minimizes reagent consumption. Although it would be desirable to combine such analytical modules and the flow analysis technology, the shear valve of the E4A Analyzer allows only for vertical displacement of the probe. The probe cannot be removed from the shear valve. Also, the shear valve includes a seal around the probe and a seal between the bottom and stationary portions of the valve, both of which are subject to wear during operating cycles of the E4A Analyzer.

Thus, while it is desirable to combine the analysis module and flow analysis technologies, the sample withdrawal, injection and dilution required for the flow analysis technology has been incompatible with the sample probe pickup and horizontal movement required to provide sample volumes to separate analysis modules.

Summary of the Invention

The present invention solves the problem posed by the prior art, providing a sample handling system that allows the integration of separate analysis modules with a flow analysis technique.

In accordance with the present invention, there is provided a sample injection cell for use in a sample handling system including a fluid delivery probe, the cell comprising:

a body having a chamber open at an upper end thereof and adapted to receive the probe;

sealing means for sealing the probe tip within the chamber; and

a plurality of conduits in communication with the chamber; (as known, for example, from US-A-3911749, which discloses a washing station for a vertically reciprocating sample probe) characterised in that

said chamber is closed at a lower end thereof, said sealing means is adapted to seal said probe within said chamber, and said plurality of conduits communicate with said lower portion of said chamber, such that when said probe tip is sealed within the chamber said tip and said lower portion cooperate to define an enclosed space suitable for fluid pressurization and fluid flow.

In accordance with another aspect of the invention, there is provided a sample handling system utilising a sample injection cell as set out above, and further including a probe adapted to carry fluid.

DE-A-3502546 discloses a gas or liquid analyzing apparatus having a sample input device in the form of an elongate probe adapted for sealing engagement with a funnel element. GB-A-2025900 discloses a sampling apparatus having an elongate probe which cooperates with sealing members disposed between individual chambers of an open-ended cell through which the probe passes.

In the case of the present invention, the upper portion of the chamber may be tapered for guiding the probe tip into the lower portion of the chamber and the sealing means may include an annular seal near the tip of the probe and a second annular seal between the upper and lower portions of the chamber. The inside diameter of the second seal is greater than the outside diameter of the probe so that the second seal is not worn by insertion and removal of the probe into the lower chamber. The system may further include control means for inserting the probe tip into the lower portion of the chamber to press the first and second seals together so as to seal the probe tip within the chamber lower portion.

An upper conduit may communicate with the upper portion of the chamber and the control means may also be for inserting the probe tip into the upper portion of the chamber for washing the probe tip.

The system may further included fluid supply means connected to one of the lower of conduits and adapted to provide wash fluid into the chamber with excess wash fluid being drawn from the upper conduit. The system may also include a plurality of sample analyzing means each adapted to accept and analyze fluid deposited by the probe and flow analyzing means in fluid communication with one of the lower conduits for analyzing fluids injected into the cell from the probe. One of the lower conduits may also be in fluid communication with diluent pumping means for pumping diluent simultaneously with sample injection into the lower portion of the chamber whereupon the diluted sample flows into the flow analyzing means for analysis.

Description of the Drawings

Figure 1 is a simplified diagram of a sample handling system in accordance with the present invention.

Figure 2 is a cross-section view of a sample injection cell used in the sample handling system of Figure 1.

Detailed Description

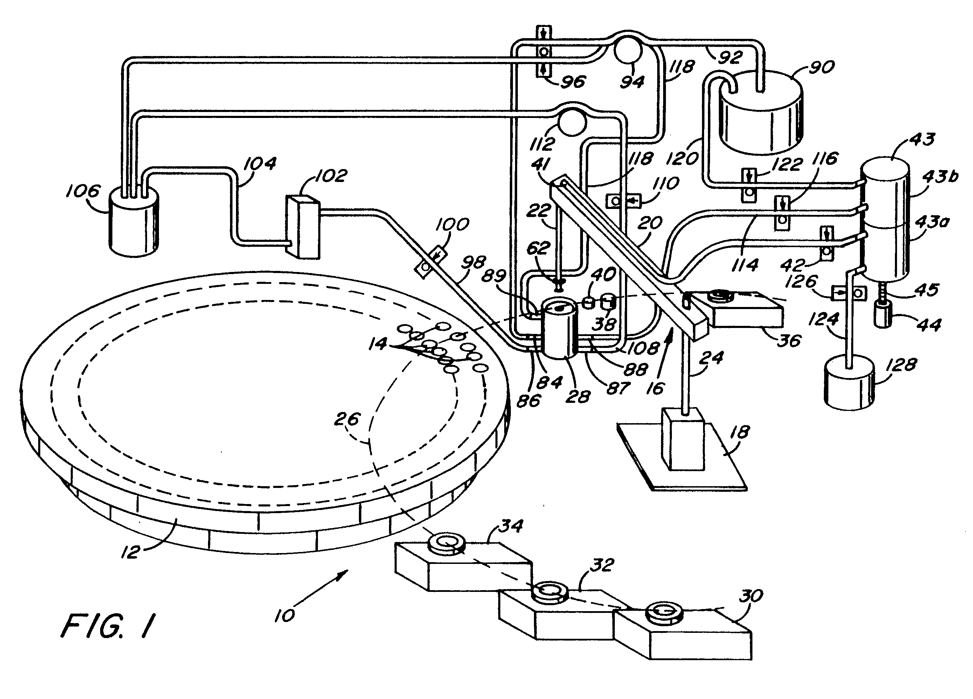

With reference to Figure 1, a sample handling system in accordance with the present invention is included as part of an analyzer 10 showed in simplified form. The analyzer 10 includes a sample turntable 12 including a plurality of sample carrying locations 14 disposed in circular rows near the periphery of the sample carousel 12. The sample carousel 12 is rotatably supported at its center and may include a suitable stepper motor and control systems to rotate the sample carousel 12 as is known in the art.

The analyzer 10 also includes a sample probe assembly 16 comprising a displacement mechanism 18, radial support arm 20 and a fluid aspirating and dispensing probe 22. The displacement mechanism 18 includes a vertical shaft 24 which can be raised and lowered and rotated about its central axis, again using suitable motors and control techniques well known in the automated instrument art. The shaft 24 is affixed to one end of the support arm 20, thus enabling the support arm 20 and probe 22 fixed to the other end of the arm 20 to be raised and lowered and rotated such that the tip of the probe is adapted to travel in a path over an arc 26.

The arc 26 passes over the inner and outer rows of sample carrying locations 14 as well as over a sample injection cell 28, four analysis modules 30-36, and two calibrator cups 38 and 40. The modules 30-36 may be similar to modules used on the Astra Analyzer mentioned above or other suitable single analyte modules otherwise well known in the art. In the embodiment disclosed herein, the modules 30-36 are adapted for the analysis of glucose, BUN, calcium and creatinine. The calibration cups 38 and 40 may contain calibration substances required for the periodic calibration of the analyzer 10 and dispensed via the probe 22.

The probe 22 is connected by conduit 41 through a pinch valve 42 to a first chamber 43a of a suitable displacement pump 43 adapted to aspirate fluid such as samples contained in the locations 14 into the probe 22 and subsequently dispense such fluid into the analysis modules 30-36 or the samples injection cell 28. The pump 43 in actuated by a stepper motor 44 acting through a lead screw 45 which in turn displaces a piston within the chamber 43a, all in a conventional fashion.

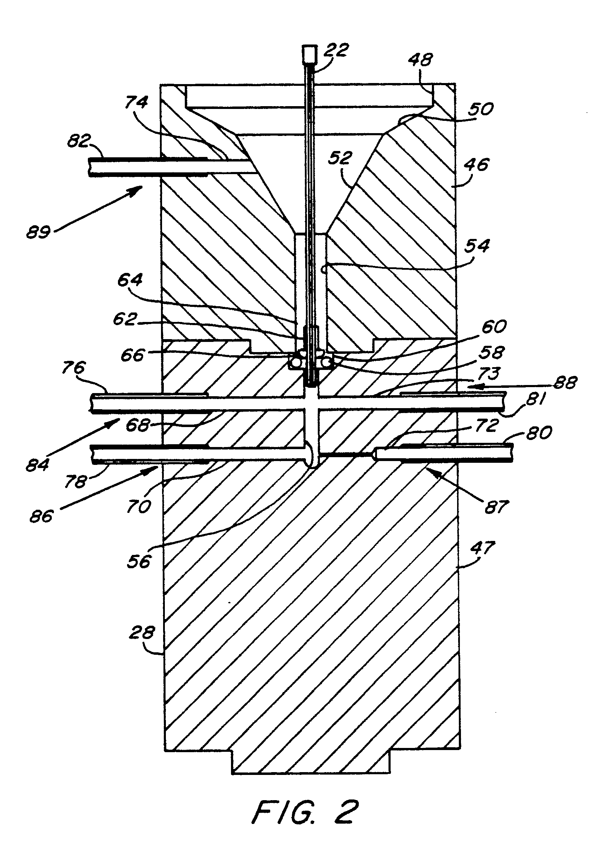

The sample injection cell 28 and probe 22 tip are illustrated in more detail with reference to Figure 2 which shows a cross-section view of the cell 28. The cell 28 is of a generally cylindrical external configuration and may be formed from an upper body 46 and a lower body 47 secured by means of suitable fasteners such as screws (not shown in the view of Figure 2). The upper body 46 includes an opening 48 at the top thereof axially aligned with the upper body 46 and having a diameter slightly less than the diameter of the cell 28 and about ten times the outside diameter of the probe 22. The lower portion of the opening 48 joins a first tapered surface 50 which in turn joins a second tapered surface 52. The surface 50 tapers more rapidly than the surface 52 with the tapered surface 52 joining a cylindrical passage 54 having a diameter slightly larger than the outside diameter of the probe 22 and the seal 62 (described below).

The lower body 47 includes a vertical hole 56 and an annular space 58 at the top of the hole 56 which receives an O-ring seal 60. The opening 48, tapered surfaces 50, 52, cylindrical passage 54, vertical hole 56, space 58 and O-ring 60 are all coaxially aligned with the central axis of the cell 28. The tapered surfaces 50 and 52 help to guide the probe 22 as the tip thereof is inserted into the cell 28. The diameter of the cylindrical passage 54 is slightly less than the diameter of the annular space 58 to thus clamp the O-ring seal 60 in the annular space 58 when the upper and lower bodies 46 and 47 are assembled as shown in Figure 2.

The probe 22 includes a seal 62 near the probe tip. The seal 62 includes a cylindrical upper portion 64 which broadens to form a cone-shaped tip 66 at the lower end of the seal 62. The cone-shaped tip 66 is adapted to be urged against the O-ring seal 60 to seal the tip of the probe 22 within the vertical hole 56.

The cell 28 includes five fluid carrying bores 68-74 formed generally radially therein. The first bore 68 intersects the vertical hole 56 slightly below the position that the tip of the probe 22 occupies when the seals 60 and 62 are urged together as described above. The second and third bores 70 and 72 intersect the bottom of the vertical hole 56. The fourth bore 73 intersects the vertical hole 56 opposite from the first bore 68. The fifth bore 74 intersects the second tapered surface 52 slightly below the intersection of the first and second tapered surfaces 50 and 52. Each of the bores 68-74 is enlarged slightly near the outer cylindrical surface of the cell 28 and respective first through fifth short rigid tubing lengths 76-82 are pressed into the enlarged portions. The tubing lengths 76-82 define a fill port 84, a flow analyzer port 86, a drain port 87, a diluent port 88, and a sip port 89.

With reference now particularly to Figure 1, the sample injection cell 28 is connected to fluid systems in the analyzer 10 which deliver diluent to the cell 28, connect the cell 28 to a flow analysis device, and enable the cell 28 to serve as a washing station for the tip of the probe 22. A reservoir 90 holds a solution suitable for diluent and wash purposes and is connected via a conduit 92 through a peristaltic pump 94 and a pinch valve 96 to the fill port 84. The flow analyzer port 86 is connected via conduit 98 through a pinch valve 100 to a flow analysis device 102. The output of the flow analysis device 102 is in turn connected by a conduit 104 to a waste reservoir 106. The flow analysis device 102 may include additional reagent delivery circuits and ion selective electrodes for the analysis of chloride, sodium, potassium and $CO^2$ and is essentially identical to the flow analysis device included in the E4A Analyzer from Beckman Instruments, Inc., Brea, California, and as described in "Beckman System E4ATM Operating Manual" (Beckman instructions number 015-556855-A), although other flow analysis devices would also be applicable. The drain port 87 is connected via a conduit 108 through a pinch valve 110 and peristaltic pump 112 to the waste reservoir 106.

The diluent port 88 is connected via a conduit 114 through a pinch valve 116 to a second chamber 43b of the pump 43. The sip port 89 is connected via a conduit 118 through the peristaltic pump 94 and the pinch valve 96 to the waste reservoir 106. The second chamber 43b of the pump 43 is also connected via a conduit 120 and pinch valve 122 to the wash/diluent reservoir 90 and the first chamber 43a is connected via a conduit 124 and pinch valve 126 to a reference solution reservoir 128.

In the operation of the analyzer 10, the sample injection cell 28 advantageously enables the flow analysis device 102 to be used simultaneously with analysis modules 30-36. In an initial state, pinch valves 42, 98, and 122 are open and pinch valves 96, 110, 116 and 126 are closed. The sample probe assembly 16 is controlled to position the probe 22 over one of the sample carrying locations 14. The probe 22 is lowered into the sample carrying location 14 and pump 43 is operated to aspire a predetermined volume of sample into the probe 22 while diluent is drawn into the second chamber 43b of the pump 43. The probe 22 is raised and rotated to a position over the sample injection cell 28.

The probe 22 is lowered into the sample injection cell 28 until the seals 60 and 62 engage. Pinch valve 122 is closed, valve 116 is opened 96 and the pump stepper motor 44 is reversed. Sample is expelled from the probe 22 into the vertical hole 56 simultaneously as diluent is delivered from the second chamber 43b through the diluent port 88, forcing the combined sample and diluent mixture through the flow analysis port 86 and the open pinch valve 98 to the flow analysis device 102.

With sample and diluent within the flow analysis device 102, the pump stepper motor 44 stops, terminating sample injection from the probe 122. Pinch valves 98 and 116 are closed, pinch valve 122 is opened, and the probe 22 is raised and rotated to the modules 30-36 to inject sample volumes into each of such modules by operating the pump stepper motor 44. Currently, analyses are performed in the flow analysis device 102 and the modules 30-36.

With sample delivered to all the modules 30-36, the probe 22 is returned to its position above the flow cell 28. The pinch valve 96 opens both conduits 92 and 118 and the pump 94 operates the flow wash/diluent solution through the ports 84, 89 and the cell 28. The probe 22 is lowered such that the tip of the probe, contaminated with reagents from, for example, the module 36, is washed by the flow of fluid through the fill port 84, the area within the cylindrical surface 54 and the area within the tapered surface 52.

With the external surfaces of the probe tip clean, the pump 94 operation terminates and pinch valve 96 closes. Pinch valve 110 is opened and pump 112 operates to drain the cell 28 through the drain port 87. The pump 112 operation terminates, pinch valve 110 closes, and the probe 22 is lowered further into the cell 28 such that the seal 62 seats against the O-ring seal 60. Pinch valve 126 opens, pinch valve 42 closes, and the pump motor 44 operates to draw reference solution from the reservoir 128 into the first chamber 43a. Pinch valves 122 and 126 close, pinch valves 42, 98 and 116 open, and the pump motor 44 operates to pump reference solution through the probe 22 while diluent is pumped through the diluent port 88. The mixture flows to the flow analysis device 102 to clean the device and provide a reference for the device 102 prior to the next patient sample analysis. The pump motor 44 is turned off and the flow of the reference solution and the diluent accordingly terminates. The probe 22 is withdrawn from the cell 28 and moved to a sample aspiration position over the sample turntable 12. Pinch valve 116 closes and pinch valve 122 opens, readying the system for the next cycle.

Thus, the sample injection cell 28 provides a unique interface between the flow analysis device 102 and the analysis modules 30-36, enabling the analyzer 10 to advantageously utilize both technologies. Furthermore, a pause otherwise required in the operation of the flow analysis device 102 while sample analysis is occurring and before the reference solution is delivered enables the probe 22 to distribute sample to the analysis modules 30-36, further increasing throughput of the analyzer 10.

Although the sample injection cell 28 has been described as including fill and sip ports 84 and 89 for washing the probe 22 within the cell 28, the fill and sip ports 84 and 89 can be eliminated along with the corresponding bores 68 and 74 and a separate wash cup or cell can be connected to the conduits 92 and 118. The probe may accordingly be washed in the separate wash cup and the sample injection cell 28 used only for sample and reference injection and dilution as described above. Furthermore, the diluent in the reservoir 90 may be replaced by a reagent if required by the particular type of flow analysis device used. Thus, the sample would be mixed with the reagent and delivered to the flow analysis device. In either instance, the sample injection cell 28 is used for sample injection and mixing prior to delivery to the flow analysis device.

It will be recognized by those skilled in the art that the invention of the present application is not to be limited to the particular embodiment disclosed herein but is to be afforded the full scope of the claims appended hereto.

## Claims

1. A sample injection cell (28) for use in a sample handling system including a fluid delivery probe (22), the cell comprising:
   a body (46,47) having a chamber (48-56) open at an upper end thereof and adapted to receive the probe;
   sealing means (60) for sealing the probe tip within the chamber; and
   a plurality of conduits (76-81) in communication with the chamber; characterised in that
   said chamber is closed at a lower end thereof, said sealing means is adapted to seal said probe within said chamber, and said plurality of conduits communicate with said lower portion of said chamber, such that when said probe tip is sealed within the chamber said tip and said lower portion cooperate to define an enclosed space suitable for fluid pressurization and fluid flow.

2. A sample injection cell as in claim 1, wherein the sealing means is an annular seal (60) having an inside diameter greater than the outside diameter of a predetermined probe (22).

3. A sample injection cell as in claim 1 or claim 2, said sealing means is adapted to seal said probe within said chamber at a point intermediate said upper and lower ends so as to define an upper, open portion and a lower, closed portion within said chamber.

4. A sample injection cell as claimed in claim 3 wherein the upper portion is sized to be of a diameter to freely receive the probe and the sealing means on the probe.

5. A sample injection cell as in any claim 4 or claim 5, including a further conduit (82) communicating with the chamber upper portion (48-54).

6. A sample injecting cell as in any of claims 3 to 5, wherein the upper portion of the chamber includes tapered walls (50, 52) for guiding the probe tip into the lower portion (56) of the chamber.

7. A sample injection cell as in any preceding claim wherein the sealing means includes a further annular seal (62) proximate the tip of the probe (22), such seal including a tapered surface (66) oriented toward the tip.

8. A sample injection cell as claimed in any one of claims 1 to 7 wherein the open chamber is sized to be of a diameter greater than the outside diameter of the probe to permit the probe to pass freely through the chamber.

9. A sample handling system, comprising a probe (22) having a tip and adapted to carry fluid; and a sample injection cell (28) in accordance with any preceding claim.

10. A system as in claim 9 wherein said cell includes an open chamber having upper (48-54) and lower (56) portions with an annular seal disposed therebetween, and the probe includes control means for inserting the probe tip into the upper portion (48-54) of the chamber and for inserting probe tip into the lower portion (56) of the chamber to press the sealing means (62) on the probe and the annular seal (60) together and to form a seal therebetween.

11. A system as in claim 10, wherein said plurality of conduits are in communication with the lower chamber portion and a further conduit communicates with the upper chamber portion, and including pump means (94) for pumping fluid through the chamber through one (84) of the lower conduits, means (98, 116, 122) for closing the remainder of the lower conduits, and means for drawing fluid through the upper conduit (82).

12. A system as in claim 11 further including fluid pumping means (44) for pumping fluid through one of the lower conduits (88) when the probe tip is sealed within the lower portion of the chamber.

13. A system as in claim 11 or claim 12, including flow analyzing means (103) in fluid communication with one (86) of the lower conduits for analyzing fluids injected into the cell from the probe.

14. A system as in any one of claims 9 to 13 further including a plurality of sample analyzing means (30-36) each adapted to accept and analyze fluid deposited in such sample analyzing means by the probe (22).

## Revendications

1. Cellule (28) d'injection d'un échantillon à utiliser dans un système de manipulation d'échantillons, comprenant une sonde (22) de fourniture de fluide, la cellule comprenant :
   un corps (46,47) ayant une chambre (45-56) ouverte à son extrémité supérieure et adaptée à recevoir la sonde;
   un moyen d'étanchéité (60) pour étanchéifier le bout de la sonde dans la chambre; et
   un certain nombre de conduits (76-81) en communication avec la chambre;
   caractérisée en ce que
   ladite chambre est fermée à son extrémité inférieure, ledit moyen d'étanchéité est adapté à sceller ladite sonde dans ladite chambre et lesdits conduits communiquent avec ladite portion inférieure de ladide chambre, de manière que lorsque ledit bout de la sonde est scellé dans la chambre, ledit bout et ladite portion inférieure coopèrent pour définir un espace fermé approprié à la pressurisation du fluide et à l'écoulement du fluide.

2. Cellule d'injection d'un échantillon selon la revendication 1, où le moyen d'étanchéité est un joint annulaire (60) ayant un diamètre intérieur plus grand que le diamètre extérieur d'une sonde prédéterminée (22).

3. Cellule d'injection d'un échantillon selon la revendication 1 ou la revendication 2, ledit moyen d'étanchéité est adapté à sceller ladite sonde dans ladite chambre en un point entre lesdites extrémités supérieure et inférieure afin de définir une portion supérieure ouverte et une portion inférieure fermée dans ladite chambre.

4. Cellule d'injection d'un échantillon selon la revendication 3, où la portion supérieure est dimensionnée pour être d'un diamètre pour recevoir librement la sonde et le moyen d'étanchéité sur la sonde.

5. Cellule d'injection d'un échantillon selon l'une quelconque des revendications 4 ou 5, comprenant un autre conduit (82) en communication avec la portion supérieure (48-54).

6. Cellule d'injection d'un échantillon selon l'une quelconque des revendications 3 à 5, où la portion supérieure de la chambre comporte des parois effilées (50, 52) pour guider le bout de la sonde dans la portion inférieure (56) de la chambre.

7. Cellule d'injection d'un échantillon selon toute revendication précédente, où le moyen d'étanchéité comprend un autre joint annulaire (62) proche du bout de la sonde (22), le joint comprenant une surface effilée (66) orientée vers le bout.

8. Cellule d'injection d'un échantillon selon l'une quelconque des revendications 1 à 7, où la chambre ouverte est dimensionnée pour être d'un diamètre plus grand que le diamètre extérieur de la sonde pour permettre à la sonde de passer librement à travers la chambre.

9. Système de manipulation d'un échantillon comprenant une sonde (22) ayant un bout et adaptée à porter un fluide; et une cellule d'injection d'échantillon (28) selon toute revendication précédente.

10. Système selon la revendication 9, où ladite cellule comprend une chambre ouverte ayant des portions supérieure (48-54) et inférieure (56) avec un joint annulaire disposé entre elles, et la sonde comporte un moyen de commande pour insérer le bout de la sonde dans la portion supérieure (48-54) de la chambre et pour insérer le bout de la sonde dans la portion inférieure (56) de la chambre pour presser le moyen d'étanchéité (62) sur la sonde et le joint annulaire (60) l'un avec l'autre pour former un joint entre eux.

11. Système selon la revendication 10, où les conduits sont en communication avec la portion inférieure de la chambre et un autre conduit communique avec la portion supérieure de la chambre, et comprenant un moyen formant pompe (94) pour pomper le fluide à travers la chambre par l'un (84) des conduits inférieurs, un moyen (98, 116, 122) pour fermer le restant des conduits inférieurs et un moyen pour attirer le fluide à travers le conduit supérieur (82).

12. Système selon la revendication 11, comprenant de plus un moyen (44) de pompage du fluide pour pomper le fluide à travers l'un des conduits inférieurs (88) quand le bout de la sonde est scellé dans la portion inférieure de la chambre.

13. Système selon la revendication 11 ou 12, comprenant un moyen d'analyse d'écoulement (103) en communication de fluide avec l'un (86) des conduits inférieurs pour analyser les fluides injectés dans la cellule, par la sonde.

14. Système selon l'une quelconque des revendications 9 à 13, comprenant de plus un certain nombre de moyens (30-36) d'analyse d'échantillon, chacun étant adapté à recevoir et à analyser un fluide déposé dans un tel moyen d'analyse d'échantillon par la sonde (22).

**Patentansprüche**

1. Probeninjektionszelle (28) zur Verwendung in einem Probenhandhabungssystem mit einer Strömungsmittelfördersonde (22), wobei die Zelle umfaßt:
   - einen Körper (46,47) mit einer an ihrem oberen Ende offenen Kammer (48-56) zur Aufnahme der Sonde;
   - Dichtungsmittel (60) zur Abdichtung der Sondenspitze innerhalb der Kammer; sowie
   - mehrere mit der Kammer in Verbindung stehende Leitungen (76-81);
dadurch **gekennzeichnet**, daß
die genannte Kammer an ihrem unteren Ende geschlossen ist, daß die Dichtungsmittel zur Abdichtung der genannten Sonde innerhalb der genannten Kammer ausgebildet sind, und daß die genannten mehreren Leitungen mit dem unteren Teil der genannten Kammer in Verbindung stehen, derart daß im Abdichtzustand der genannten Sondenspitze innerhalb der Kammer die genannte Spitze und der genannte untere Teil unter Bildung eines für Strömungsmitteldruckbeaufschlagung und Strömungsmitteldurchfluß geeigneten umschlossenen Raums zusammenwirken.

2. Probeninjektionszelle nach Anspruch 1, bei welcher die Dichtungsmittel eine ringförmige Dichtung (60) bilden, deren Innendurchmesser größer als der Außendurchmesser einer vorgegebenen Sonde (22) ist.

3. Probeninjektionszelle nach Anspruch 1 oder Anspruch 2, wobei die genannten Dichtungsmittel zur Abdichtung der Sonde innerhalb der Kammer an einer zwischen den genannten oberen und unteren Enden gelegenen Stelle ausgebildet sind, derart daß sie einen oberen offenen Teil und einen unteren geschlossenen Teil innerhalb der Kammer definieren.

4. Probeninjektionszelle nach Anspruch 3, bei welcher der obere Teil in seinem Durchmesser so bemessen ist, daß er die Sonde und die Dichtungsmittel auf der Sonde freigängig aufnimmt.

5. Probeninjektionszelle nach einem der Ansprüche 4 oder 5, umfassend eine mit dem oberen Teil (48-54) der Kammer in Verbindung stehende weitere Leitung (82).

6. Probeninjektionszelle nach einem der Ansprüche 3 bis 5, bei welcher der obere Teil der Kammer schräg verlaufende Wandungen (50,52) aufweist, um die Sondenspitze in den unteren Teil (56) der Kammer zu führen.

7. Probeninjektionszelle nach einem der vorhergehenden Ansprüche, bei welcher die Dichtungsmittel eine erste Ringdichtung (62) nächst der Spitze der Sonde (22) aufweisen und diese Dichtung eine sich in Richtung auf die Sondenspitze verjüngende Oberfläche (66) aufweist.

8. Probeninjektionszelle nach einem der Ansprüche 1 bis 7, bei welcher die Durchmesserabmessung der offenen Kammer größer als der Außendurchmesser der Sonde ist, um einen freien Durchtritt der Sonde durch die Kammer zu gestatten.

9. Probenhandhabungssystem mit einer eine Spitze aufweisenden Sonde (22) zur Strömungsmittelleitung sowie mit einer Probeninjektionszelle (28) nach einem der vorhergehenden Ansprüche.

10. System nach Anspruch 9, bei welchem die genannte Zelle eine offene Kammer mit einem oberen (48-54) und einem unteren (56) Teil sowie mit einer zwischen diesen angeordneten Ringdichtung aufweist, und die Sonde Steuermittel zum Einführen der Probenspitze in den oberen Teil (48-54) der Kammer und zum Einführen der Probenspitze in den unteren Teil (56) der Kammer aufweist, um die Dichtungsmittel (62) an der Sonde und die Ringdichtung (60) gegeneinander zu pressen und zwischen ihnen eine Dichtung herzustellen.

11. System nach Anspruch 10, bei welchem die genannten mehreren Leitungen mit dem unteren Kammerteil in Verbindung stehen und eine weitere Leitung mit dem oberen Kammerteil verbunden ist, des weiteren mit Pumpmitteln (94), um Strömungsmittel durch eine (84) der unteren Leitungen durch die Kammer zu pumpen, Mitteln (98,116,122) zum Schließen der übrigen unteren Leitungen, sowie Mitteln zum Abzug von Strömungsmittel durch die obere Leitung (82).

12. System nach Anspruch 11, des weiteren umfassend Strömungsmittel-Pumpvorrichtungen (44), um Strömungsmittel durch eine der unteren Leitungen (88) zu pumpen, sobald die Sondenspitze sich im Abdichtungszustand innerhalb dem unteren Teil der Kammer befindet.

13. System nach Anspruch 11 oder Anspruch 12, umfassend im Strömungsbetrieb arbeitende Analysemittel (103), die in Strömungsverbindung mit einer (86) der unteren Leitungen stehen, zur Analyse von aus der Sonde in die Zelle injizierten Strömungsmitteln.

14. System nach einem der Ansprüche 9 bis 13, des weiteren umfassend mehrere Probenanalysiermittel (30-36), die jeweils zur Aufnahme und Analyse von durch die Sonde (22) in diese Probenanalysevorrichtungen eingebrachtem Strömungsmittel ausgebildet sind.

FIG. 1

FIG. 2